# FASCICULE DE BREVET EUROPEEN

(11) **EP 4 270 700 B1**
(45) Date de publication et mention de la délivrance du brevet: **11.02.2026**
(21) Numéro de dépôt: 23169217.9
(22) Date de dépôt: 21.04.2023
(51) Int. Cl.: H02G 15/113, H01R 12/53, H01R 4/2429

(54) **BOÎTIERS DE CONNEXION POUR CÂBLES ETHERNET À PAIRE UNIQUE ET RÉSEAUX ETHERNET CÂBLÉS ASSOCIÉS**
VERBINDUNGSGEHÄUSE FÜR EINPAAR-ETHERNET-KABEL UND ZUGEHÖRIGE VERDRAHTETE ETHERNET-NETZWERKE
CONNECTION HOUSINGS FOR SINGLE PAIR ETHERNET CABLES AND RELATED WIRED ETHERNET NETWORKS

(30) Priorité: 28.04.2022 FR 2204009
(43) Date de publication de la demande: 01.11.2023
(73) Titulaire: Aginode Group, 75001 Paris (FR)
(72) Inventeur: SAGE, Jean-Jacques, 26790 Suze-la-Rousse (FR); WILLEMS, Didier, 5651 Tarcienne (BE); DE BOLLE, Luc, 1742 Ternat (BE)
(74) Mandataire: Ipsilon

(56) Documents cités:
- WO-A1-2021/252938
- DE-A1- 3 719 088
- FR-A1- 2 667 992
- US-A1- 2022 013 932

## Description

### Domaine technique

La présente invention concerne un boîtier de connexion pour câbles Ethernet à paire unique.

### Arrière-plan technologique

La technologie SPE (acronyme anglo-saxon mis pour Single Pair Ethernet) est une norme récente utilisant des câbles Ethernet à paire unique pour transmettre des données à des vitesses allant jusqu'à 1 Gbit par seconde pour une distance de 40 mètres et assurer simultanément l'alimentation d'appareils ou équipements terminaux grâce à la technologie PoDL (acronyme anglo-saxon qui signifie Power over Data Line) ou à la technologie SPoE (acronyme anglo-saxon qui signifie Single-Pair Power over Ethernet), contrairement aux réseaux LAN classiques qui utilisent des câbles LAN à quatre paires et des connecteurs RJ45 classiques.

Avec l'explosion de l'Internet des Objets, il sera de plus en plus nécessaire d'être en capacité de connecter, au sein d'un même réseau câblé Ethernet, un grand nombre d'équipements tels que des capteurs de température, ou de présence, ou d'humidité, ou de luminosité, ou de contrôle d'accès, ou des caméras, ou encore des équipements de contrôle et d'alimentation de l'éclairage LED.

On connait du document WO 2021/252938 A1 un réseau Ethernet câblé avec une architecture Bus entre une source de données et de puissance et une terminaison, utilisant un boîtier de couplage à trois voies pour connecter chaque équipement loT au Bus, selon un motif en guirlande (« daisy-chain architecture » en terminologie anglo-saxonne). Le Bus est ainsi constitué d'une pluralité de câbles Ethernet à paire unique munis de connecteurs d'extrémité, chaque connecteur d'extrémité étant relié à une voie du boîtier de couplage. Chaque équipement loT est par ailleurs connecté à une troisième voie du boîtier de couplage par l'intermédiaire d'un autre câble Ethernet à paire unique muni également de connecteurs d'extrémité.

Un inconvénient d'une telle architecture réside dans le fait que tous les câbles à paire unique utilisés doivent être munis de connecteurs d'extrémité aptes à venir en couplage avec un connecteur dans le boîtier, ce qui rend fastidieux l'installation d'un réseau comportant un grand nombre d'équipements loT, et/ou l'ajout, dans un réseau existant de tout nouvel équipement. En outre, dans le cas de l'ajout d'un équipement loT au sein d'un réseau existant, le Bus doit être interrompu pendant l'opération d'ajout, rendant inutilisables les autres équipements déjà connectés pendant toute la durée de l'intervention.

Par ailleurs, les normes relatives aux architectures de réseaux câblés SPE imposent que tout câble dérivé par rapport au Bus ait une longueur maximale de 15 cm, ce qui complique encore l'installation et les possibilités de raccordement des équipements loT. Par exemple, dans le cas de l'architecture décrite dans le document WO 2021/252938 A1, tout équipement loT devra être placé à proximité du Bus principal et du boîtier de couplage permettant de relier cet équipement au Bus.

Le document US 2022/013932 A1 divulgue un autre exemple d'un boîtier de connexion pour câbles Ethernet à paire unique.

### Résumé de l'invention

La présente invention a pour but de pallier une ou plusieurs des limitations précitées des solutions connues.

La présente invention a pour objet un boîtier de connexion pour câbles Ethernet à paire unique, ledit boîtier de connexion comportant :
- une embase et un couvercle amovible délimitant avec l'embase un logement interne ;
- au moins une carte de circuit imprimé s'étendant dans le logement interne parallèlement à l'embase ;
- au moins une première paire principale de contacts électriques et une première paire secondaire de contacts électriques portées par ladite au moins une carte de circuit imprimé, chaque paire de contacts électriques comprenant un premier contact électrique et un second contact électrique ;
- un premier ensemble de pistes conductrices porté par ladite au moins une carte de circuit imprimé et couplant électriquement les premiers contacts électriques de la première paire principale et de la première paire secondaire, et un deuxième ensemble de pistes conductrices porté par ladite au moins une carte de circuit imprimé et couplant électriquement les seconds contacts électriques de la première paire principale et de la première paire secondaire ; et
- une première et une seconde voies principales d'accès au boîtier, et une première voie secondaire d'accès au boîtier,

dans lequel le premier et le second contacts électriques de la première paire principale sont deux contacts à perforation ou à déplacement d'isolation s'étendant perpendiculairement au-dessus de ladite au moins une carte de circuit imprimé et configurés pour recevoir transversalement et connecter électriquement directement deux conducteurs isolés d'un même câble principal Ethernet à paire unique entrant et sortant du boîtier par les deux voies principales d'accès au boîtier,
ledit boîtier de connexion comportant en outre un premier et un deuxième éléments métalliques de raccordement portés par et s'étendant perpendiculairement au-dessus de ladite au moins une carte de circuit imprimée, chaque premier et deuxième élément métallique de raccordement étant positionné entre une voie principale d'accès et ladite première paire principale de contacts à perforation ou à déplacement d'isolation,
où chaque premier et deuxième éléments métalliques de raccordement forme un berceau pour recevoir transversalement ledit câble principal Ethernet à paire unique, en ce que le boîtier de connexion comporte en outre un ensemble additionnel de pistes conductrices porté par ladite au moins une carte de circuit imprimé et couplant électriquement entre eux les éléments métalliques de raccordement, et où ladite au moins une carte de circuit imprimé porte en outre un circuit d'adaptation d'impédance à éléments passifs relié entre le premier ensemble et le deuxième ensemble de pistes conductrices.

Dans des modes de réalisation, le premier et le second contacts électriques de la première paire secondaire sont configurés pour connecter électriquement deux conducteurs isolés d'un même câble secondaire Ethernet relié au travers de ladite première voie secondaire d'accès au boîtier.

Le boîtier de connexion peut ainsi venir se greffer très facilement sur tout câble Ethernet à paire unique formant un bus principal de connexion dans un réseau Ethernet.

Dans des modes de réalisation possibles, le premier et le second contacts électriques de la première paire secondaire sont sous la forme d'un connecteur apte à coopérer avec un connecteur prévu à une extrémité dudit câble secondaire Ethernet.

Dans des modes de réalisation possibles, le premier et le second contacts électriques de la première paire secondaire sont deux contacts à perforation ou à déplacement d'isolation s'étendant perpendiculairement au-dessus de ladite au moins une carte de circuit imprimé, de manière à recevoir transversalement et connecter électriquement directement les deux conducteurs isolés dudit câble secondaire Ethernet, ledit boîtier de connexion comportant un troisième élément métallique de raccordement porté par et s'étendant perpendiculairement au-dessus de ladite au moins une carte de de circuit imprimée, et couplé électriquement à l'ensemble additionnel de pistes conductrices, ledit troisième élément métallique de raccordement étant positionné entre la première voie secondaire d'accès et la première paire secondaire de contacts à perforation ou à déplacement d'isolation et formant un berceau pour recevoir transversalement ledit câble secondaire Ethernet.

Dans des modes de réalisation possibles, le boîtier de connexion comporte une seconde paire principale de contacts électriques entre la première paire principale de contacts électriques et le deuxième élément métallique de raccordement , le premier et le second contacts électriques de la seconde paire principale étant deux contacts à perforation ou à déplacement d'isolation s'étendant perpendiculairement au-dessus de ladite au moins une carte de circuit imprimé, les contacts des deux paires principales étant configurés pour recevoir transversalement et connecter électriquement directement deux conducteurs isolés de deux segments discontinus dudit même câble principal Ethernet à paire unique entrant et sortant par respectivement la première voie principale et la seconde voie principale.

Dans des modes de réalisation possibles, les ensembles de pistes conductrices sont portés par une face de ladite au moins une carte de circuit imprimé opposée à celle portant les contacts à perforation ou à déplacement d'isolation.

Dans des modes de réalisation possibles, le premier contact électrique de la seconde paire principale est couplé électriquement au premier ensemble de pistes conductrices, et le second contact électrique de la seconde paire principale est couplé électriquement au deuxième ensemble de pistes conductrices.

Dans ces modes de réalisation, ledit circuit imprimé porte en outre de préférence un circuit d'adaptation d'impédance à éléments passifs est associé à chaque paire de contacts à perforation ou à déplacement d'isolation.

Dans des modes de réalisation possibles, ladite au moins une carte de circuit imprimé porte en outre un circuit formant charge de terminaison de bus, connecté en série avec le premier ensemble et le deuxième ensemble de pistes conductrices, et le boîtier de connexion comporte une pièce métallique solidaire mécaniquement du deuxième élément métallique de raccordement, ladite pièce métallique étant configurée pour désactiver, respectivement activer, le circuit formant charge de terminaison selon qu'un câble est présent, respectivement non présent, dans le berceau formé par le deuxième élément métallique de raccordement.

Dans des modes de réalisation possibles, le boitier de connexion comporte une seconde paire secondaire de contacts électriques portée par ladite au moins une carte de circuit imprimé et comprenant un premier contact électrique et un second contact électrique, un troisième ensemble de pistes conductrices porté par ladite au moins une carte de circuit imprimé et couplant électriquement les premiers contacts électriques de la seconde paire principale et de la seconde paire secondaire, et un quatrième ensemble de pistes conductrices porté par ladite au moins une carte de circuit imprimé et couplant électriquement les seconds contacts électriques de la seconde paire principale et de la seconde paire secondaire.

Dans ces modes, ladite au moins une carte de circuit imprimé porte en outre de préférence un second circuit d'adaptation d'impédance à éléments passifs relié entre le troisième ensemble et le quatrième ensemble de pistes conductrices.

Ici encore, les ensembles de pistes conductrices peuvent être portés par une face de ladite au moins une carte de circuit imprimé opposée à celle portant les contacts à perforation ou à déplacement d'isolation.

Dans des modes de réalisation possibles, le boîtier de connexion comporte une seconde voie secondaire d'accès au boîtier, et le premier et le second contacts électriques de la première paire secondaire et de la seconde paire secondaire sont configurés pour connecter électriquement deux conducteurs isolés aux extrémités respectives d'un même câble secondaire Ethernet à paire unique relié au travers de la première et de la seconde voies secondaires pour former une boucle de dérivation.

L'invention concerne également l'utilisation du boîtier de connexion pour réaliser différentes variantes de réseau Ethernet à paire unique câblé.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
La figure 1 illustre un câble Ethernet blindé à paire unique ;
La figure 2 illustre schématiquement un boîtier de connexion selon un premier mode de réalisation conforme à l'invention ;
La figure 3 représente schématiquement les connexions électriques pour les éléments internes au boîtier de la figure 2 ;
La figure 4 illustre schématiquement une variante d'un boîtier de connexion selon le premier mode de réalisation conforme à l'invention ;
La figure 5 représente schématiquement les connexions électriques pour les éléments internes au boîtier de la figure 4 ;
La figure 6 illustre un exemple de connexion d'un équipement loT à un câble principal à paire unique selon une première mise en œuvre possible utilisant le boîtier de connexion selon le premier mode de réalisation conforme à l'invention ;
La figure 7 illustre une vue partielle d'une autre variante de réalisation d'un boîtier de connexion selon le premier mode de réalisation conforme à l'invention ;
La figure 8 illustre une autre vue partielle du boîtier de la figure 7, ainsi qu'un détail grossi de cette vue ;
La figure 9 illustre schématiquement les connexions électriques pour des éléments internes à un boîtier connexion selon un deuxième mode de réalisation conforme à l'invention ;
La figure 10 illustre un exemple de connexion d'un équipement loT à un câble principal à paire unique selon une troisième mise en œuvre possible utilisant un boîtier de connexion selon le premier mode de réalisation et un boîtier de connexion selon le deuxième mode de réalisation conformes à l'invention ;
La figure 11 illustre trois exemples de réseaux Ethernet à paire unique câblés utilisant le boîtier de connexion dans ses différents modes de réalisation conformes à l'invention.

### Description de mode(s) de réalisation

Dans les figures, les éléments identiques ou équivalents porteront les mêmes signes de référence. Les différents schémas ne sont pas à l'échelle.

Les différentes figures représentent l'invention appliquée au cas non limitatif où tous les câbles Ethernet utilisés sont des câbles blindés à paire unique.

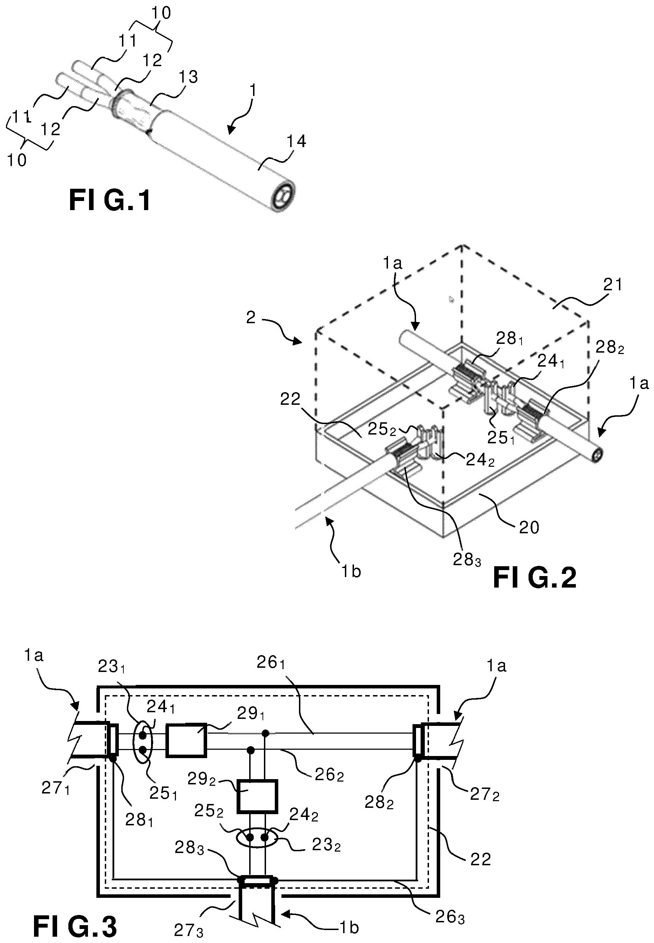

En référence à la figure 1, un tel câble 1 Ethernet blindé à paire unique comporte classiquement deux conducteurs 10. Chaque conducteur 10 est isolé, et comporte classiquement un fil ou une âme centrale 11 de plusieurs fils, par exemple en cuivre, entouré concentriquement d'une couche d'isolation 12 sur toute la longueur du conducteur. La paire de conducteurs 10, de préférence torsadée, est entourée concentriquement sur toute sa longueur par une couche 13 de blindage, par exemple sous forme d'un écran ou d'une tresse métallique. L'ensemble est protégé classiquement par une gaine isolante 14 formant l'enveloppe externe du câble 1. La constitution du câble 1 représentée sur la figure 1 est la même pour tous les câbles 1a, 1b ou 1c qui vont être décrits dans la suite.

Un exemple de réalisation d'un boîtier de connexion 2 selon un premier mode de réalisation de l'invention va à présent être décrit en référence aux figures 2 et 3 :
Le boîtier 2 comporte une embase 20 ainsi qu'un couvercle amovible 21. Le couvercle amovible 21 délimite avec l'embase 20 un logement interne à l'intérieur duquel au moins une carte de circuit imprimé 22 s'étend parallèlement à l'embase 20.

Ladite au moins une carte de circuit imprimé 22 porte au moins une première paire principale 23₁ de contacts électriques et une première paire secondaire 23₂ de contacts électriques (voir figure 3). Chaque paire de contacts électriques comprend un premier contact électrique 24₁, 24₂ et un second contact électrique 25₁, 25₂.

Ladite au moins une carte de circuit imprimé 22 porte également un premier ensemble 26₁ de pistes conductrices et un second ensemble 26₂ de pistes conductrices (voir figure 3). Le premier ensemble 26₁ de pistes conductrices couple électriquement les premiers contacts électriques 24₁, 24₂ de la première paire principale 23₁ et de la première paire secondaire 23₂. Le second ensemble 26₂ de pistes conductrices couple électriquement les seconds contacts électriques 25₁, 25₂ de la première paire principale 23₁ et de la première paire secondaire 23₂.

Le boîtier de connexion 2 comporte en outre trois voies d'accès au boîtier, à savoir une première voie principale 27₁ et une seconde voie principale 27₂ d'accès au boîtier, et une voie secondaire 27₃ d'accès au boîtier. De préférence, les deux voies principales 27₁ et 27₂ d'accès au boîtier 2 sont sensiblement alignées avec la première paire principale 23₁ de contacts électriques, et la voie secondaire 27₃ d'accès au boîtier est sensiblement alignée avec la première paire secondaire 23₂ de contacts électriques. Chacune des trois voies 27₁ à 27₃ peut être réalisée sous la forme d'une ouverture traversant une paroi de l'embase 20, ou, comme schématisé sur la figure 2, d'une ouverture traversant une paroi du couvercle amovible 21. En variante non représentée, le couvercle amovible 21 et l'embase 20 peuvent présenter des parois coopérant ensemble pour former les trois voies d'accès.

Conformément à l'invention, au moins le premier et le second contacts électriques 24₁, 25₁ de la première paire principale 23₁ sont deux contacts à perforation ou à déplacement d'isolation s'étendant perpendiculairement au-dessus de ladite au moins une carte de circuit imprimé 22 et configurés pour recevoir transversalement et connecter électriquement directement deux conducteurs isolés d'un même câble, tel que le câble à Ethernet à paire unique 1a représenté sur les figures 2 et 3, qui entre dans le boîtier 2 par la première voie principale 27₁ et qui sort du boîtier 2 sans discontinuité par la seconde voie principale 27₂.

Un contact à perforation ou à déplacement d'isolation est un contact auto dénudant permettant d'établir très simplement, avec ou sans outillage spécifique, un contact électrique avec l'âme conductrice d'un conducteur isolé. Dans les variantes non limitatives représentées sur les figures, les contacts sont des contacts à déplacement d'isolant qui comportent classiquement une lame métallique en forme de U dont la base repose sur la carte de circuit imprimée 22, et dont, les branches du U reçoivent transversalement un conducteur isolé et exercent latéralement une pression sur le conducteur de manière à couper la couche isolante et établir le contact électrique. Les contacts à déplacement d'isolant peuvent être remplacés par des contacts à perforation d'isolant.

Ladite au moins une carte de de circuit imprimée 22 porte également un premier élément métallique de raccordement 28₁ et un deuxième élément métallique de raccordement 28₂ qui s'étendent perpendiculairement au-dessus de ladite au moins une carte de de circuit imprimée 22. Le premier élément métallique de raccordement 28₁ est positionné, de préférence en alignement, entre la première voie principale 27₁ d'accès et ladite première paire principale 23₁ de contacts à perforation ou à déplacement d'isolation. Le deuxième élément métallique de raccordement 28₂ est positionné, de préférence en alignement, entre la seconde voie principale 27₂ d'accès et cette même première paire principale 23₁ de contacts à perforation ou à déplacement d'isolation. Chaque élément métallique de raccordement 28₁, 28₂ forme un berceau pour recevoir transversalement le câble principal 1a, comme visible sur la figure 2.

Ladite au moins une carte de de circuit imprimée 22 porte également un ensemble additionnel 26₃ de pistes conductrices qui couple électriquement entre eux les éléments métalliques de raccordement 28₁, 28₂. Les trois ensembles 26₁ à 26₃ de pistes conductrices sont portés de préférence par une face de ladite au moins une carte de circuit imprimé 22 opposée à celle portant les contacts à perforation ou à déplacement d'isolation et les éléments métalliques de raccordement, la connexion électrique s'effectuant classiquement par des trous métallisés traversant la carte de circuit imprimé ou tout moyen équivalent.

Les deux voies principales 27₁ et 27₂ sont de préférence portées par une première et une deuxième faces opposées du boîtier 2 et la voie secondaire 27₃ est alors portée par une troisième face contiguë aux première et deuxième faces. Cela permet d'optimiser les pistes en réalisant des pistes conductrices en forme de T pour chacun des premier et deuxième ensembles 26₁ et 26₂ de pistes.

Dans l'exemple non limitatif représenté sur les figures 2 et 3, le premier et le second contacts électriques 24₂, 25₂ de la première paire secondaire 23₂ sont également deux contacts à perforation ou à déplacement d'isolation s'étendant perpendiculairement au-dessus de ladite au moins une carte de circuit imprimé 22, recevant transversalement et connectant électriquement deux conducteurs isolés situé à une extrémité d'un câble secondaire Ethernet à paire unique, tel que le câble secondaire 1b de la figure 2 entrant au travers de la voie secondaire 27₃ d'accès. Ladite au moins une carte de circuit imprimé 22 porte également un troisième élément métallique de raccordement 28₃ s'étendant perpendiculairement au-dessus de ladite au moins une carte de de circuit imprimée 22, et couplé électriquement au troisième ensemble 26₃ de pistes conductrices, ledit troisième élément métallique de raccordement 28₃ étant positionné, de préférence en alignement, entre la voie secondaire 27₃ d'accès et ladite première paire secondaire 23₂ de contacts à perforation ou à déplacement d'isolation. De façon analogue aux premier et deuxième éléments métalliques de raccordement 28₁, 28₂, le troisième élément métallique de raccordement 28₃ forme un berceau pour recevoir transversalement une extrémité du câble secondaire 1b.

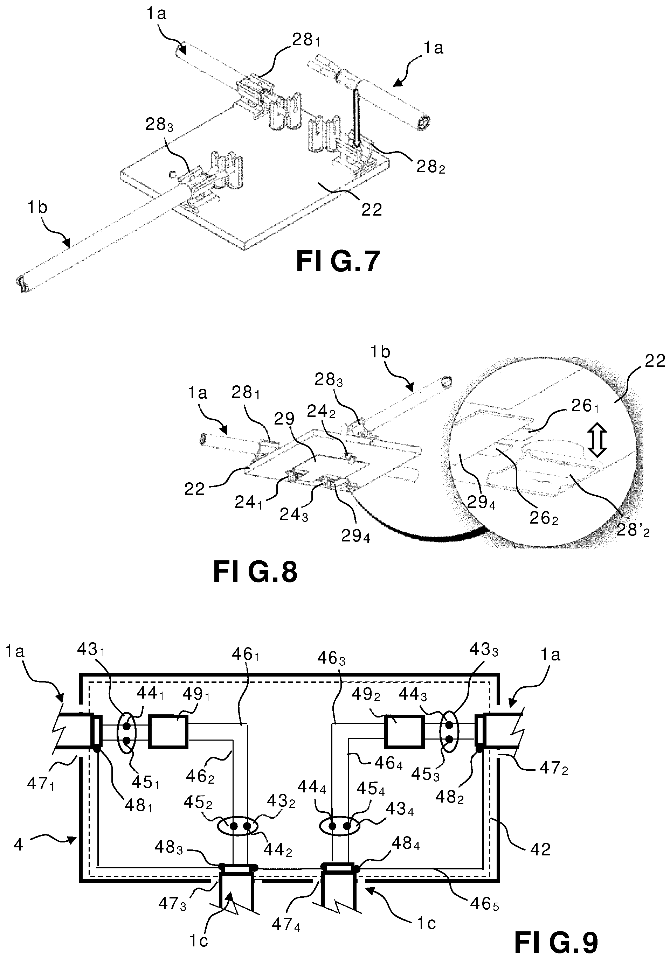

Comme visible sur la figure 3, laquelle schématise les connexions électriques sur la face inférieure de la carte 22, ladite au moins une carte de circuit imprimé 22 porte en outre de préférence deux circuits 29₁, 29₂ d'adaptation d'impédance à éléments passifs, le premier circuit 29₁ étant relié entre le premier ensemble 26₁ et le deuxième ensemble 26₂ de pistes conductrices et associé à la première paire principale 23₁ de contacts à perforation ou à déplacement d'isolation, le second circuit 29₂ étant relié entre le premier ensemble 26₁ et le deuxième ensemble 26₂ de pistes conductrices et associé à la première paire secondaire 23₂ de contacts à perforation ou à déplacement d'isolation. Ces deux circuits portent la référence unique 29 sur l'exemple de la figure 8. Ces circuits 29₁ et 29₂ d'adaptation d'impédance permettent d'obtenir une impédance contrôlée correspondant aux câbles 1a et 1b utilisés, par exemple de 100 Ohms.

En variante non représentée, le premier et le second contacts électriques 24₂, 25₂ de la première paire secondaire 23₂ pourraient être réalisés sous la forme d'un connecteur apte à coopérer avec un connecteur prévu à une extrémité dudit câble secondaire Ethernet à paire unique 1b. Dans ce cas, le deuxième circuit 29₂ d'adaptation d'impédance n'est pas forcément nécessaire.

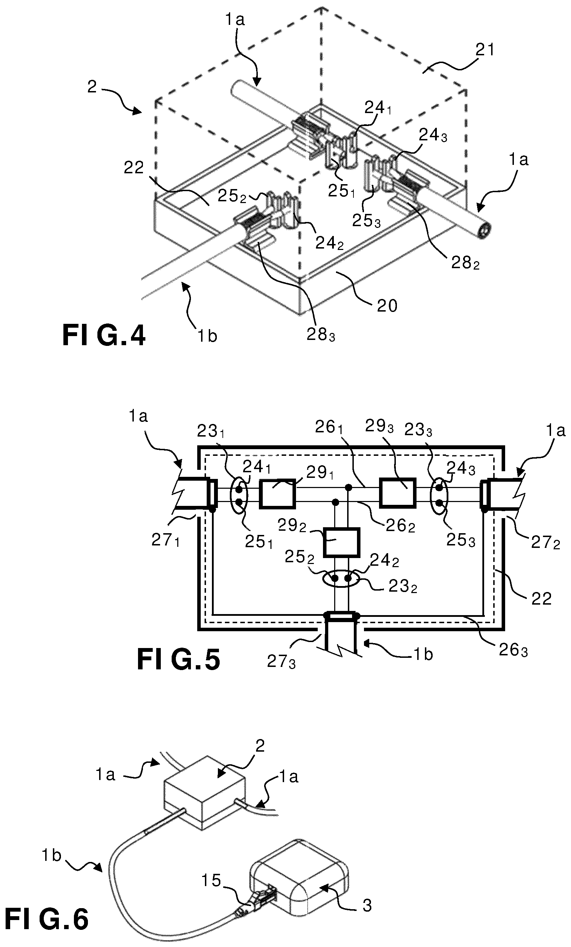

Une variante de réalisation du boîtier de connexion 2 selon le premier mode de réalisation conforme à l'invention va à présent être décrite en référence aux figures 4 et 5 :
Cette autre variante ne diffère de celle décrite ci-avant en référence aux figures 2 et 3 qu'en ce que le boîtier 2 comporte une seconde paire principale 23₃ de contacts électriques (voir figure 5), de préférence sensiblement alignée entre la première paire principale 23₁ de contacts électriques et le deuxième élément métallique de raccordement 28₂, le premier et le second contacts électriques 24₃, 25₃ de la seconde paire principale 23₃ étant deux contacts à perforation ou à déplacement d'isolation s'étendant perpendiculairement au-dessus de ladite au moins une carte de circuit imprimé 22 et configurés pour recevoir transversalement et connecter électriquement directement deux conducteurs isolés dudit même câble principal Ethernet à paire unique 1a. Dans cette variante, le câble Ethernet principal 1a doit être reçu avec discontinuité, comme représenté sur la figure 4. Ainsi, le câble principal 1a est sectionné entre la première paire 23₁ et la troisième paire 23₃ de façon à obtenir deux segments discontinus de ce câble principal Ethernet à paire unique 1a, l'un entrant par la première voie principale 27₁ et l'autre sortant par la seconde voie principale 27₂. Les conducteurs isolés de l'extrémité libre du premier segment sont ainsi reçus par les deux contacts 24₁ et 25₁ de la première paire principale 23₁, alors que ces mêmes conducteurs isolés de l'extrémité libre du second segment sont reçus par les deux contacts 24₃ et 25₃ de la seconde paire principale 23₃. Dans ce cas, ladite carte de circuit imprimé 22 porte en outre de préférence un troisième circuit 29₃ d'adaptation d'impédance à éléments passifs, relié entre le premier ensemble 26₁ et le deuxième ensemble 26₂ de pistes conductrices et associé à la seconde paire principale 23₃ de contacts à perforation ou à déplacement d'isolation (voir figure 5).

Dans les deux variantes précédentes, le câble principal 1a ou chacun des deux segments discontinus de ce câble principal (lorsque ce dernier est sectionné), est dénudé partiellement d'une part, de sa gaine isolante (14 sur la figure 1) et de sa couche de blindage (13 sur la figure 1) sur une portion destinée à être reçue par la première ou la seconde paire principale afin que chacun de ses deux conducteurs isolés (10 sur la figure 1) puisse être reçu dans son contact à perforation ou déplacement d'isolation associé, et d'autre part, de sa gaine isolante seulement sur sa portion destinée à être reçue par les éléments métalliques, afin que sa couche de blindage soit reçue dans le berceau du premier 28₁ ou du deuxième 28₂ éléments métalliques de raccordement du boîtier 2 de connexion. Ces différents éléments de raccordement et le troisième ensemble 26₃ de pistes permettent ainsi de connecter la couche de blindage 13 du câble principal 1a à une masse électrique.

Dans le cas où la première paire secondaire 23₂ comprend aussi des contacts 24₂ et 25₂ à perforation ou déplacement d'isolation, le boîtier 2 peut recevoir, par la voie secondaire 27₃ d'accès, une extrémité non munie de connecteur du câble secondaire 1b. Ici encore, cette extrémité doit être préalablement partiellement dénudée d'une part, de sa gaine isolante et de sa couche de blindage sur une portion destinée à être reçue par la deuxième paire 23₂ afin que chacun de ses deux conducteurs isolés puisse être reçu dans son contact à perforation ou déplacement d'isolation associé, et d'autre part, de sa gaine seulement sur sa portion destinée à être reçue par l'élément métallique de raccordement 28₃, afin que sa couche de blindage soit reçue dans le berceau formé par cet élément métallique de raccordement 28₃.

Il convient de noter que le boîtier de connexion 2 décrit dans ses différentes variantes ci-avant peut également être utilisé pour connecter un câble principal 1a à paire unique et un câble secondaire à paire unique 1b qui sont tous les deux non blindés. Dans ce cas, les éléments métalliques de raccordement 28₁ à 28₃ ont pour seule fonction d'assurer un bon maintien mécanique des câbles à l'intérieur du boîtier 2.

La figure 6 illustre une première façon d'utiliser le boîtier de connexion 2 décrit ci-avant. Sur cette figure 6, on a représenté un câble principal 1a Ethernet à paire unique, constituant le bus principal d'un réseau Ethernet câblé. Le boîtier de connexion 2 vient se greffer sur ce câble principal 1a comme explicité ci-avant, soit sans discontinuité (variante du boîtier 2 selon la figure 2), soit après avoir sectionné le câble principal 1a en deux segments discontinus (variante du boîtier 2 selon la figure 4). Pour ce faire, le couvercle amovible 21 du boîtier 2 de connexion est retiré de l'embase 20 de façon à pouvoir faire passer le câble principal 1a par les deux voies principales 27₁ et 27₂, ou, lorsque le câble principal 1a a été sectionné, de façon à faire entrer le premier segment discontinu par la première voie principale 27₁ d'accès et faire sortir le second segment discontinu par la seconde voie principale 27₂ d'accès. Si le câble principal 1a est un câble blindé, ce câble 1a (ou chaque extrémité des segments discontinus de ce câble principal 1a) est dénudé de sa gaine externe et de sa couche de blindage sur une portion de longueur suffisante de façon à exposer les deux conducteurs isolés qui sont placés respectivement dans les contacts à perforation ou à déplacement d'isolation de la première paire principale 23₁ et de la seconde paire principale 23₃. Les contacts à perforation ou à déplacement d'isolation sont alors actionnés pour perforer la couche isolante de chaque conducteur et établir la connexion électrique avec les fils en cuivre de ces conducteurs. En outre, ce câble 1a (ou chaque extrémité des segments discontinus de ce câble principal 1a) est dénudé de sa gaine externe seule sur une portion de longueur suffisante de façon à exposer sa couche de blindage. Celle-ci se retrouve alors reçue transversalement par et en contact avec le berceau formé par l'élément métallique de raccordement associé 28₁ et 28₂. Un équipement loT 3 est connecté au réseau par l'intermédiaire d'un câble secondaire 1b à paire unique dont une première extrémité est connectée à l'équipement 3, par exemple via un connecteur 15 dédié équipant cette première extrémité, la deuxième extrémité de ce câble secondaire 1b pénétrant dans le boîtier via la voie secondaire d'accès pour être directement connectée à la première paire secondaire 23₂ du boîtier. Si le boîtier 2 est selon l'une des variantes représentées sur les figures 2 à 5, la deuxième extrémité du câble secondaire 1b est dépourvue de connecteur et doit être dénudée de sa gaine et de sa couche de blindage sur une portion de longueur suffisante de façon à exposer les deux conducteurs isolés du câble secondaire 1b qui sont placés respectivement dans les contacts à perforation ou à déplacement d'isolation de la première paire secondaire 23₂. En outre, la deuxième extrémité de ce câble secondaire 1b est également dénudée de sa gaine externe de façon à exposer sa couche de blindage. Celle-ci se retrouve alors reçue transversalement par et en contact avec le berceau formé par l'élément métallique de raccordement associé 28₃.

Les figures 7 et 8 illustrent une variante tout à fait intéressante du boîtier 2 de connexion des figures 4 et 5. Dans cette variante, la carte de circuit imprimé 22 porte un circuit 29₄ formant charge de terminaison de bus connecté en série avec le premier ensemble 26₁ et le deuxième ensemble 26₂ de pistes conductrices. Une pièce métallique 28'₂ solidaire mécaniquement du deuxième élément métallique de raccordement 28₂ vient désactiver, respectivement activer, ce circuit 29₄ formant charge de terminaison, selon qu'un segment du câble principal 1a est présent, respectivement non présent, dans le berceau formé par le deuxième élément métallique de raccordement 28₂. La liaison mécanique entre l'élément métallique de raccordement 28₂ et la pièce métallique 28'₂ peut être une translation, comme représentée par la double flèche de la figure 8. La figure 8 illustre le cas où un segment de câble 1a est présent dans le berceau 28₂, de sorte que le circuit 29₄ formant charge de terminaison est désactivé. Lorsqu'aucun segment de câble 1a n'est présent dans le berceau 28₂, la pièce métallique 28'₂ active le circuit 29₄ en reliant les deux ensembles 26₁ et 26₂ de pistes conductrices. Ainsi, un même boîtier de connexion 2 selon cette variante de réalisation peut être utilisé soit pour connecter un équipement loT à une position intermédiaire quelconque du Bus principal, soit pour connecter un équipement loT en fin de Bus principal, auquel cas le boîtier 2 assure également la terminaison du Bus.

Comme indiqué ci-avant, afin de respecter la norme, la longueur du câble secondaire 1b de la figure 6 ne peut excéder 15 cm, ce qui peut rendre complexe l'installation lorsque l'on ne dispose pas de place pour positionner un équipement loT 3 proche du câble principal 1a.

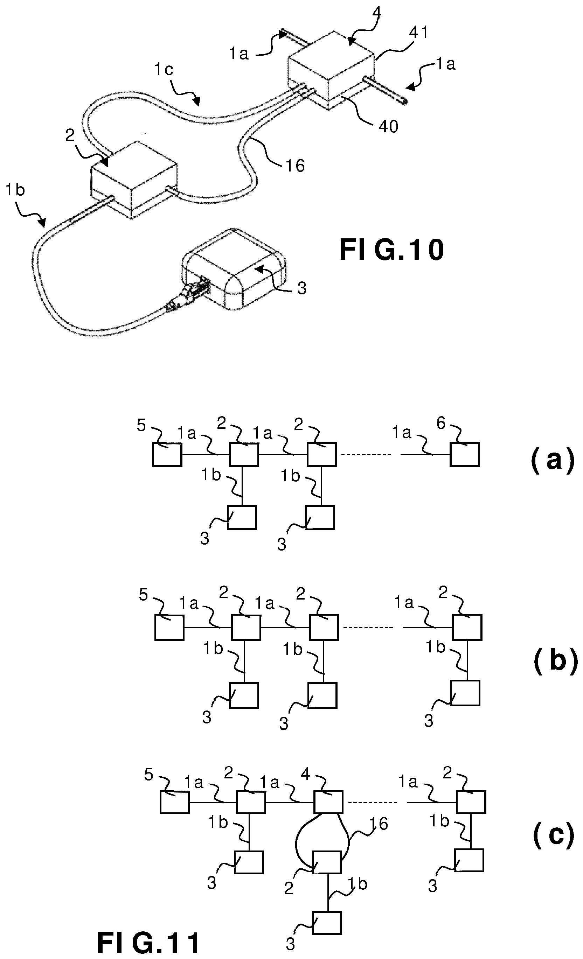

Pour résoudre ce problème, un deuxième mode de réalisation d'un boîtier de connexion 4 pour câbles Ethernet à paire unique, et son utilisation conjointe avec le boîtier 2 de connexion selon le premier mode de réalisation décrit ci-avant vont à présent être décrits en relation avec les figures 9 et 10 :

De manière analogue au boîtier 2 de connexion, le boîtier 4 selon ce deuxième mode de réalisation comporte une embase 40 et un couvercle amovible 41 délimitant avec l'embase 40 un logement interne, et au moins une carte de circuit imprimé 42 s'étendant dans le logement interne parallèlement à l'embase 40.

Ladite au moins une carte de circuit imprimé 42 porte ici une première paire principale 43₁ de contacts électriques, une première paire secondaire 43₂ de contacts électriques, une seconde paire principale 43₃ de contacts électriques et une seconde paire secondaire 43₄ de contacts électriques, chaque paire de contacts électriques comprenant un premier contact électrique 44₁, 44₂, 44₃, 44₄ et un second contact électrique 45₁, 45₂, 45₃, 45₄.

Ladite au moins une carte de circuit imprimé 42 porte en outre un premier ensemble 46₁ de pistes conductrices couplant électriquement les premiers contacts électriques 44₁, 44₂ de la première paire principale 43₁ et de la première paire secondaire 43₂, un deuxième ensemble 46₂ de pistes conductrices couplant électriquement les seconds contacts électriques 45₁, 45₂ de la première paire principale 43₁ et de la première paire secondaire 43₂, un troisième ensemble 46₃ de pistes conductrices couplant électriquement les premiers contacts électriques 44₃, 44₄ de la seconde paire principale 43₃ et de la seconde paire secondaire 43₄, et un quatrième ensemble 46₄ de pistes conductrices couplant électriquement les seconds contacts électriques 45₃, 45₄ de la seconde paire principale 43₃ et de la seconde paire secondaire 43₄.

Le boîtier de connexion 4 comporte en outre deux voies principales d'accès, à savoir une première voie principale 47₁ d'accès au boîtier et une seconde voie principale 47₂ d'accès au boîtier, et deux voies secondaires d'accès, à savoir une première voie secondaire 47₃ d'accès au boîtier et une seconde voie secondaire 47₄ d'accès au boîtier. La première voie principale 47₁ d'accès au boîtier est de préférence sensiblement alignée avec la première paire principale 43₁ de contacts électriques. La seconde voie principale 47₂ d'accès au boîtier est de préférence sensiblement alignée avec la seconde paire principale 43₃ de contacts électriques. La première voie secondaire 47₃ d'accès au boîtier est de préférence sensiblement alignée avec la première paire secondaire 43₂ de contacts électriques. Enfin, la seconde voie secondaire 47₄ d'accès au boîtier est de préférence sensiblement alignée avec la seconde paire secondaire 43₄ de contacts électriques.

De façon analogue au boîtier de connexion 2, et conformément à l'invention, le premier et le second contacts électriques des paires associées aux voies principales, à savoir de la première paire principale 43₁ et de la seconde paire principale 43₃, sont deux contacts à perforation ou à déplacement d'isolation s'étendant perpendiculairement au-dessus de ladite au moins une carte de circuit imprimé 42 et configurés pour recevoir transversalement et connecter électriquement deux conducteurs isolés de deux segments discontinus d'un même câble principal Ethernet à paire unique 1a entrant et sortant par respectivement la première voie principale 47₁ et la seconde voie principale 47₂.

Ladite au moins une carte de de circuit imprimée 42 porte en outre un premier élément métallique de raccordement 48₁ et un deuxième élément métallique de raccordement 48₂ qui s'étendent perpendiculairement au-dessus de ladite au moins une carte de circuit imprimé. Le premier élément métallique de raccordement 48₁ est positionné, de préférence en alignement, entre la première voie d'accès principale 47₁ et la première paire principale 43₁ de contacts à perforation ou à déplacement d'isolation. Le deuxième élément métallique de raccordement 48₂ est positionné, de préférence en alignement entre la seconde voie d'accès principale 47₂ et la seconde paire principale 43₃ de contacts à perforation ou à déplacement d'isolation. Ces éléments de raccordement sont identiques aux éléments métalliques de raccordement 28₁ à 28₃ du boîtier 2 de connexion, et forment en conséquence un berceau pour recevoir transversalement les deux segments discontinus du câble principal 1a. Un ensemble additionnel 46₅ de pistes conductrices, porté par ladite au moins une carte de circuit imprimé 42, couple électriquement entre eux les éléments métalliques de raccordement 48₁, 482.

Les ensembles 46₁ à 46₅ de pistes conductrices sont portés de préférence par une face de ladite au moins une carte de circuit imprimé 42 opposée à celle portant les contacts à perforation ou à déplacement d'isolation et les éléments métalliques de raccordement, la connexion électrique s'effectuant classiquement par des trous métallisés traversant la carte de circuit imprimé ou tout moyen équivalent.

Le premier et le second contacts électriques de la première paire secondaire 43₂ et de la seconde paire secondaire 43₄ sont configurés quant à eux pour connecter électriquement deux conducteurs isolés aux extrémités respectives d'un même câble secondaire Ethernet à paire unique 1c relié au travers de la première et de la seconde voies secondaires 47₃, 47₄ pour former une boucle de dérivation 16.

Dans l'exemple non limitatif de la figure 9, les premiers 44₂, 44₄ et les seconds 45₂, 45₄ contacts électriques de la première paire secondaire 43₂ et de la seconde paire secondaire 43₄ sont également des contacts à perforation ou à déplacement d'isolation s'étendant perpendiculairement au-dessus de ladite au moins une carte de circuit imprimé 42, de manière à recevoir transversalement et connecter électriquement directement les deux conducteurs isolés aux extrémités de la boucle de dérivation 16, et le boîtier 4 comporte en conséquence un troisième 48₃ et un quatrième 48₄ éléments métalliques de raccordement portés par et s'étendant perpendiculairement au-dessus de ladite au moins une carte de de circuit imprimée 42, et couplés électriquement à l'ensemble additionnel 46₅ de pistes conductrices, le troisième 48₃, respectivement le quatrième 48₄, élément métallique de raccordement étant positionné, de préférence en alignement, entre la première 47₃, respectivement la seconde 47₄, voie d'accès secondaire et la première, 43₂, respectivement la seconde 43₄, paire secondaire associée de contacts à perforation ou à déplacement d'isolation et formant un berceau pour recevoir transversalement les extrémités du câble secondaire 1c à paire unique formant la boucle de dérivation 16.

En variante non représentée, les premiers 44₂, 44₄ et les seconds 45₂, 45₄ contacts électriques de la première paire secondaire 43₂ et de la seconde paire secondaire 43₄ pourraient être réalisés sous la forme de connecteurs aptes à coopérer avec un connecteur prévu à chaque extrémité dudit câble secondaire Ethernet à paire unique 1c.

Comme visible sur la figure 9, laquelle schématise les connexions électriques sur la face inférieure de la carte de circuit imprimée 42, ladite au moins une carte de circuit imprimé 42 porte en outre de préférence un premier circuit 49₁ d'adaptation d'impédance à éléments passifs relié entre le premier ensemble 46₁ et le deuxième ensemble 46₂ de pistes conductrices, et un second circuit 49₂ d'adaptation d'impédance à éléments passifs relié entre le troisième ensemble 46₃ et le quatrième ensemble 46₄ de pistes conductrices. Ici encore, ces circuits 49₁ et 49₂ permettent d'obtenir une impédance contrôlée correspondant aux câbles 1a et 1c reliés au boitier 4 de connexion, par exemple une impédance de 100 Ohms.

Ainsi, de façon analogue à ce qui avait été décrit en référence avec la figure 6, c'est ici le boîtier de connexion 4 qui vient se greffer sur le câble principal 1a constituant le bus principal d'un réseau Ethernet, après avoir sectionné ce câble principal 1a en deux segments discontinus. Pour ce faire, le couvercle amovible 41 du boîtier de connexion 4 est retiré de l'embase 40 de façon à faire entrer le premier segment discontinu du câble principal 1a sectionné par la première voie principale 47₁ d'accès et faire sortir le second segment discontinu du câble principal 1a sectionné par la seconde voie principale 47₂ d'accès. Si le câble principal 1a est un câble blindé, chaque extrémité des segments discontinus de ce câble principal 1a est dénudée de sa gaine externe et de sa couche de blindage sur une portion de longueur suffisante de façon à exposer les deux conducteurs isolés qui sont placés respectivement dans les contacts à perforation ou à déplacement d'isolation de la première paire principale 43₁ et de la seconde paire principale 43₃. Les contacts à perforation ou à déplacement d'isolation sont alors actionnés pour perforer la couche isolante de chaque conducteur et établir la connexion électrique avec les fils en cuivre de ces conducteurs. En outre, chaque extrémité des segments discontinus de ce câble principal 1a est dénudée de sa gaine externe seule sur une portion de longueur suffisante de façon à exposer sa couche de blindage. Celle-ci se retrouve alors reçue transversalement par et en contact avec le berceau formé par l'élément métallique de raccordement associé 48₁ et 48₂. On opère de même pour connecter les deux extrémités du câble secondaire 1c formant boucle de dérivation aux deux autres paires secondaires 43₂ et 43₄ de contacts.

L'assemblage obtenu (boucle de dérivation 16 reliée au boitier de connexion 4 lui-même relié sur le câble principal 1a) est utilisé avantageusement en association avec le boitier de connexion 2 selon le premier mode de réalisation, comme représenté sur la figure 10, afin de solutionner la situation où l'équipement 3 se situe à plus de 15 cm du câble principal 1a. Ici, le boîtier de connexion 2 (auquel est relié l'équipement 3 par l'intermédiaire du câble secondaire à paire unique 1b) ne vient pas se greffer sur le câble principal 1a, mais sur la boucle de dérivation 16. Par exemple, le premier et le second contacts électriques 24₁, 25₁ de la première paire principale 23₁ du boîtier de connexion 2 sont en connexion électrique directe avec les deux conducteurs isolés de ladite boucle de dérivation 16 entrant et sortant du boîtier de connexion 2 par les deux voies principales 27₁ d'accès au boîtier de connexion 2.

D'autres variantes de réalisation d'un boîtier 4 selon le deuxième mode de réalisation de l'invention peuvent être envisagées. Par exemple, une seule voie d'accès secondaire au boîtier 4 pourrait être envisagée, au lieu des deux voies d'accès secondaires 47₃ et 47₄ de la figure 9. Dans ce cas, le câble secondaire 1c peut être un câble comprenant deux paires, l'une pour connexion à la première paire secondaire 43₂, l'autre pour connexion à la deuxième paire secondaire 43₄.Une adaptation du boîtier 2 est alors nécessaire pour qu'il puisse être connecté à ce câble à deux paires.

A titre d'exemples non limitatifs, les vues (a) à (c) de la figure 11 illustrent différents réseaux Ethernet câblés utilisant le boîtier de connexion à trois voies, voire le boîtier de connexion 4 (dérivation) objets de l'invention. Pour chaque vue (a) à (c), le réseau Ethernet câblé comporte un câble principal Ethernet à paire unique 1a (blindé ou non) formant un bus principal reliant une source de données et de puissance 5 à une terminaison.

Dans le cas de la vue (a), deux boîtiers de connexion 2 selon le premier mode de réalisation de l'invention sont greffés sur le câble principal 1a au niveau de deux positions intermédiaires du câble et servent à connecter chacun directement un équipement loT 3 par l'intermédiaire d'un câble secondaire 1b. La terminaison est réalisée par un équipement 6 dédié.

Le réseau de la vue (b) diffère de celui de la vue (a) en ce que la terminaison est réalisée via un boîtier de connexion 2 selon la variante décrite en référence aux figures 7 et 8, servant en outre à connecter directement un équipement loT 3 supplémentaire par l'intermédiaire d'un câble secondaire 1b.

Le réseau de la vue (c) diffère de celui de la vue (b) en ce que l'un des boitiers 2 de connexion à trois voies a été remplacé par un boîtier de connexion 4 selon le deuxième mode de réalisation de l'invention, et que l'équipement 3 correspondant est connecté à un boîtier 2 de connexion qui vient à son tour se greffer sur la boucle de dérivation 16 connectée au boîtier de connexion 4, par l'intermédiaire d'un boîtier de connexion 2 selon le premier mode de réalisation, comme décrit en référence à la figure 10.

Dans tous les cas, le fait de prévoir des boîtiers 2 ou 4 de l'invention, munis de paires de contacts à perforation ou déplacement d'isolant et configurés pour se greffer sur le câble principal 1a à paire unique, permet d'ajouter facilement des équipements loT. Les réseaux et boîtiers peuvent être adaptés par exemple pour fonctionner jusqu'à des fréquences de 200 MHz, sur un canal de transmission de type T1-M-A-25 et/ou T1-M-A-50 défini par l'ISO/IEC JTC SC25.

## Revendications

1. Boîtier de connexion (2 ; 4) pour câbles Ethernet à paire unique (1 ; 1a, 1b, 1c), ledit boîtier de connexion (2 ; 4) comportant :
• une embase (20 ; 40) et un couvercle amovible (21 ; 41) délimitant avec l'embase (20 ; 40) un logement interne ;
• au moins une carte de circuit imprimé (22 ; 42) s'étendant dans le logement interne parallèlement à l'embase (20 ; 40) ;
• au moins une première paire principale (23₁ ; 43₁) de contacts électriques et une première paire secondaire (23₂ ; 43₂) de contacts électriques portées par ladite au moins une carte de circuit imprimé (22 ; 42), chaque paire de contacts électriques comprenant un premier contact électrique (24₁, 24₂ ; 44₁, 44₂) et un second contact électrique (25₁, 25₂ ; 45₁, 45₂) ;
• un premier ensemble (26₁ ; 46₁) de pistes conductrices porté par ladite au moins une carte de circuit imprimé (22 ; 42) et couplant électriquement les premiers contacts électriques (24₁, 24₂ ; 44₁, 44₂) de la première paire principale (23₁ ; 43₁ ) et de la première paire secondaire (23₂ ; 43₂), et un deuxième ensemble (26₂ ; 46₂) de pistes conductrices porté par ladite au moins une carte de circuit imprimé (22 ; 42) et couplant électriquement les seconds contacts électriques (25₁, 25₂; 45₁, 45₂) de la première paire principale (23₁ ; 43₁ ) et de la première paire secondaire (23₂ ; 43₂ ); et
• une première (27₁ ; 47₁) et une seconde (27₂ ; 47₂) voies principales d'accès au boîtier, et une première voie secondaire (27₃ ; 47₃) d'accès au boîtier,
dans lequel le premier et le second contacts électriques (24₁, 25₁ ; 44₁, 45₁) de la première paire principale (23₁ ; 43₁) sont deux contacts à perforation ou à déplacement d'isolation s'étendant perpendiculairement au-dessus de ladite au moins une carte de circuit imprimé (22 ; 42) et configurés pour recevoir transversalement et connecter électriquement directement deux conducteurs isolés d'un même câble principal Ethernet à paire unique (1a) entrant et sortant du boîtier (2 ; 4) par les deux voies principales (27₁, 27₂ ; 47₁, 47₂) d'accès au boîtier,
ledit boîtier de connexion (2 ; 4) comportant en outre un premier (28₁ ; 48₁) et un deuxième (28₂ ; 48₂) éléments métalliques de raccordement portés par et s'étendant perpendiculairement au-dessus de ladite au moins une carte de circuit imprimée (22 ; 42), chaque premier et deuxième élément métallique de raccordement (28₁, 28₂ ; 48₁, 48₂) étant positionné entre une voie principale d'accès et ladite première paire principale (23₁ ; 43₁) de contacts à perforation ou à déplacement d'isolation,
**caractérisé en ce que** chaque premier et deuxième éléments métalliques de raccordement (28₁, 28₂ ; 48₁, 48₂) forme un berceau pour recevoir transversalement ledit câble principal Ethernet à paire unique (1a), **en ce que** le boîtier de connexion comporte en outre un ensemble additionnel (26₃ ; 46₅) de pistes conductrices porté par ladite au moins une carte de circuit imprimé (22 ; 42) et couplant électriquement entre eux les éléments métalliques de raccordement (28₁, 28₂ ; 48₁, 48₂), et **en ce que** ladite au moins une carte de circuit imprimé (22 ; 42) porte en outre un circuit (29₁, 29₂ ; 29₁-29₃, 29 ;49₁) d'adaptation d'impédance à éléments passifs relié entre le premier ensemble (26₁ ; 49₁) et le deuxième ensemble (26₂ ; 49₂) de pistes conductrices.

2. Boîtier de connexion (2 ; 4) selon la revendication 1, dans lequel le premier et le second contacts électriques (24₂, 25₂ ; 44₂, 45₂) de la première paire secondaire (23₂ ; 43₂) sont sous la forme d'un connecteur apte à coopérer avec un connecteur prévu à une extrémité dudit câble secondaire Ethernet (1b ; 1c).

3. Boîtier de connexion (2 ; 4) selon la revendication 1, dans lequel le premier et le second contacts électriques (24₂, 25₂ ; 44₂, 45₂) de la première paire secondaire (23₂ ; 43₂) sont deux contacts à perforation ou à déplacement d'isolation s'étendant perpendiculairement au-dessus de ladite au moins une carte de circuit imprimé (22 ; 42), de manière à recevoir transversalement et connecter électriquement directement les deux conducteurs isolés dudit câble secondaire Ethernet (1b ; 1c), ledit boîtier de connexion (2 ; 4) comportant un troisième élément métallique de raccordement (28₃ ; 48₃) porté par et s'étendant perpendiculairement au-dessus de ladite au moins une carte de de circuit imprimée (22 ; 42), et couplé électriquement à l'ensemble additionnel (26₃ ; 46₅) de pistes conductrices, ledit troisième élément métallique de raccordement (28₃ ; 48₃) étant positionné entre la première voie secondaire (27₃ ; 47₃) d'accès et la première paire secondaire (23₂ ; 43₂) de contacts à perforation ou à déplacement d'isolation et formant un berceau pour recevoir transversalement ledit câble secondaire Ethernet (1b ; 1c).

4. Boîtier de connexion (2 ; 4) selon l'une quelconque des revendications précédentes, comportant une seconde paire principale (23₃ ; 43₃) de contacts électriques entre la première paire principale (23₁; 43₁) de contacts électriques et le deuxième élément métallique de raccordement (28₂ ; 48₂), le premier et le second contacts électriques (24₃, 25₃ ; 44₃, 45₃ ) de la seconde paire principale (23₃; 43₃) étant deux contacts à perforation ou à déplacement d'isolation s'étendant perpendiculairement au-dessus de ladite au moins une carte de circuit imprimé (22 ; 42), les contacts des deux paires principales (23₁, 23₃ ; 43₁, 43₃) étant configurés pour recevoir transversalement et connecter électriquement directement deux conducteurs isolés de deux segments discontinus dudit même câble principal Ethernet à paire unique (1a) entrant et sortant par respectivement la première voie principale (27₁ ; 47₁) et la seconde voie principale (27₂ ; 47₂).

5. Boîtier de connexion (2) selon la revendication 4, dans lequel les ensembles (26₁, 26₂ ; 26₁ - 26₃) de pistes conductrices sont portés par une face de ladite au moins une carte de circuit imprimé (22) opposée à celle portant les contacts à perforation ou à déplacement d'isolation.

6. Boitier de connexion (2) selon l'une quelconque des revendications 4 ou 5, dans lequel le premier contact électrique (24₃) de la seconde paire principale (23₃) est couplé électriquement au premier ensemble (26₁) de pistes conductrices, et le second contact électrique (25₃) de la seconde paire principale (23₃) est couplé électriquement au deuxième ensemble (26₂) de pistes conductrices.

7. Boitier de connexion (2) selon la revendication 6, dans lequel ledit circuit (29₁, 29₂ ; 29₁-29₃, 29) d'adaptation d'impédance à éléments passifs est associé à chaque paire de contacts à perforation ou à déplacement d'isolation.

8. Boitier de connexion (2) selon l'une quelconque des revendications 6 ou 7, **caractérisé en ce que** ladite au moins une carte de circuit imprimé (22) porte en outre un circuit (29₄) formant charge de terminaison de bus, connecté en série avec le premier ensemble (26₁) et le deuxième ensemble (26₂) de pistes conductrices, et **en ce que** le boîtier (2) de connexion comporte une pièce métallique (28'₂) solidaire mécaniquement du deuxième élément métallique de raccordement (28₂), ladite pièce métallique (28'₂) étant configurée pour désactiver, respectivement activer, le circuit (29₄) formant charge de terminaison selon qu'un câble est présent, respectivement non présent, dans le berceau formé par le deuxième élément métallique de raccordement (28₂).

9. Boitier de connexion (4) selon la revendication 4, comportant une seconde paire secondaire (43₄) de contacts électriques portée par ladite au moins une carte de circuit imprimé (42) et comprenant un premier contact électrique (44₄) et un second contact électrique (45₄), un troisième ensemble (46₃) de pistes conductrices porté par ladite au moins une carte de circuit imprimé (42) et couplant électriquement les premiers contacts électriques (44₃, 44₄) de la seconde paire principale (43₃) et de la seconde paire secondaire (43₄), et un quatrième ensemble (46₄) de pistes conductrices porté par ladite au moins une carte de circuit imprimé (42) et couplant électriquement les seconds contacts électriques (45₃, 45₄) de la seconde paire principale (43₃) et de la seconde paire secondaire (43₄).

10. Boîtier de connexion (4) selon la revendication 9, dans lequel ladite au moins une carte de circuit imprimé (42) porte en outre un second circuit (49₁) d'adaptation d'impédance à éléments passifs relié entre le troisième ensemble (46₃) et le quatrième ensemble (46₄) de pistes conductrices.

11. Boîtier de connexion (4) selon la revendication 10, dans lequel les ensembles (46₁ - 46₄ ; 46₁ - 46₅) de pistes conductrices sont portés par une face de ladite au moins une carte de circuit imprimé (42) opposée à celle portant les contacts à perforation ou à déplacement d'isolation.

12. Boîtier de connexion (4) selon l'une quelconque des revendications 9 à 11, comportant une seconde voie secondaire (47₄) d'accès au boîtier, et dans lequel le premier et le second contacts électriques de la première paire secondaire (43₂) et de la seconde paire secondaire (43₄) sont configurés pour connecter électriquement deux conducteurs isolés aux extrémités respectives d'un même câble secondaire Ethernet à paire unique (1c) relié au travers de la première et de la seconde voies secondaires (47₃, 47₄) pour former une boucle de dérivation (16).

13. Réseau Ethernet câblé comportant :
• un câble principal Ethernet à paire unique (1a) comprenant, à l'intérieur d'une gaine isolante externe (14), une paire de conducteurs isolés (10) apte à transmettre des données et de la puissance, ledit câble principal (1a) ayant ses deux extrémités reliées respectivement entre une source (5) de données et de puissance et une terminaison (6) ;
• au moins un équipement (3) apte à recevoir les données et la puissance du câble principal Ethernet à paire unique (1a) ; et
• un câble secondaire Ethernet à paire unique (1b) comprenant, à l'intérieur d'une gaine isolante externe (14), une paire de conducteurs isolés (10) apte à transmettre des données et de la puissance, une première extrémité du câble secondaire (1b) étant connectée électriquement audit équipement (3) ;
**caractérisé en ce qu'**il comporte un premier boîtier de connexion (2) selon l'une quelconque des revendications 1 à 8, connecté dans le réseau de sorte que ledit câble principal Ethernet à paire unique (1a) entre et sorte du premier boîtier (2) de connexion par respectivement la première (27₁) et la seconde (27₂) voies principales d'accès au premier boîtier (2), en étant reçu transversalement par le berceau du premier (29₁) et du deuxième (29₂) éléments métalliques de raccordement, les deux conducteurs isolés du câble principal Ethernet à paire unique (1a) étant en connexion électrique avec le premier et le second contacts électriques (24₁, 25₁) de la première paire principale (23₁), et **en ce que** les deux conducteurs isolés de la deuxième extrémité dudit câble secondaire Ethernet à paire unique (1b) sont reliés électriquement, au travers de la première voie secondaire (27₃) d'accès au premier boîtier (2), au premier et au second contacts électriques (24₂, 25₂) de la première paire secondaire (23₂).

14. Réseau Ethernet câblé selon la revendication 13, **caractérisé en ce que** le câble principal Ethernet à paire unique (1a) comprend, à l'intérieur de la gaine externe isolante (14), une couche de blindage (13) entourant les deux conducteurs isolés (10), et **en ce que** le câble principal Ethernet à paire unique (1a) est dénudé de sa gaine externe isolante afin que la couche de blindage soit en contact avec les berceaux du premier (29₁) et deuxième (29₂) éléments métalliques de raccordement du premier boîtier de connexion (2).

15. Réseau Ethernet câblé selon l'une quelconque des revendications 13 ou 14, **caractérisé en ce que** le premier boîtier de connexion (2) est selon la revendication 4, et **en ce que** le câble principal Ethernet à paire unique (1a) est sectionné en deux segments discontinus, les contacts de la première paire principale (23₁) recevant transversalement et connectant électriquement directement les deux conducteurs isolés du segment discontinu entrant par la première voie principale (27₁) et les contacts de la seconde paire principale (23₃) recevant transversalement et connectant électriquement directement les deux conducteurs isolés du segment discontinu sortant par la seconde voie principale (27₂).

16. Réseau Ethernet câblé selon la revendication 15, **caractérisé en ce que** ladite terminaison est réalisée par un deuxième boîtier de connexion (2) selon la revendication 8 dont le circuit (29₄) formant charge de terminaison est activé.

17. Réseau Ethernet câblé comportant :
• un câble principal Ethernet à paire unique (1a) comprenant, à l'intérieur d'une gaine isolante externe (14), une paire de conducteurs isolés (10) apte à transmettre des données et de la puissance, ledit câble principal (1a) ayant ses deux extrémités reliées respectivement entre une source (5) de données et de puissance et une terminaison (6) ;
• au moins un équipement (3) apte à recevoir les données et la puissance du câble principal Ethernet à paire unique (1a) ; et
• un câble secondaire Ethernet à paire unique (1b) comprenant, à l'intérieur d'une gaine isolante externe (14), une paire de conducteurs isolés (10) apte à transmettre des données et de la puissance, une première extrémité du câble secondaire (1b) étant connectée électriquement audit équipement (3) ;
**caractérisé en ce qu'**il comporte un premier boîtier de connexion (2) selon l'une quelconque des revendications 1 à 8, un second câble secondaire Ethernet à paire unique (1c) comprenant, à l'intérieur d'une gaine isolante externe, une paire de conducteurs isolés apte à transmettre des données et de la puissance, et un deuxième boîtier de connexion (4) selon la revendication 12, connectés dans le réseau de sorte que :
• le premier et le second contacts électriques de la première paire principale (43₁,) et de la seconde paire principale (43₃) du deuxième boîtier de connexion (4) sont connectés électriquement directement aux deux conducteurs isolés de deux segments discontinus dudit câble principal Ethernet à paire unique (1a) entrant et sortant par respectivement la première voie principale (47₁) et la seconde voie principale (47₃) dudit deuxième boîtier (4) ;
• le premier et le second contacts électriques de la première paire secondaire (43₂) et de la seconde paire secondaire (43₄) du deuxième boîtier de connexion (4) sont connectés électriquement directement aux deux conducteurs isolés aux extrémités respectives dudit second câble secondaire Ethernet à paire unique (1c) au travers de la première et de la seconde voies secondaires (47₃, 47₄) de manière à former une boucle de dérivation (16) ;
• ladite boucle de dérivation (16) entre et sorte du premier boîtier (2) de connexion par respectivement la première (27₁) et la seconde (27₂) voies principales d'accès au premier boîtier (2), en étant reçu transversalement par le berceau du premier (29₁) et du deuxième (29₂) éléments métalliques de raccordement, les deux conducteurs isolés de la boucle de dérivation (16) étant en connexion électrique avec le premier et le second contacts électriques (24₁, 25₁) de la première paire principale (23₁), et
• les deux conducteurs isolés de la deuxième extrémité dudit câble secondaire Ethernet à paire unique (1b) sont reliés électriquement, au travers de la première voie secondaire (27₃) d'accès au premier boîtier (2), au premier et au second contacts électriques (24₂, 25₂) de la première paire secondaire (23₂) du premier boîtier (2).

18. Réseau Ethernet câblé selon la revendication 17 **caractérisé en ce que** le câble principal Ethernet à paire unique (1a) comprend, à l'intérieur de la gaine isolante externe, une couche de blindage entourant les deux conducteurs isolés, et **en ce que** chaque segment discontinu du câble principal Ethernet à paire unique (1a) est dénudé de sa gaine afin que la couche de blindage soit en contact avec le berceau du premier (48₁) ou du deuxième (48₃) éléments métalliques de raccordement du deuxième boîtier de connexion (4).

## Patentansprüche

1. Anschlussdose (2; 4) für einpaarige Ethernet-Kabel (1; 1a, 1b, 1c), wobei die Anschlussdose (2; 4) umfasst:
• ein Unterteil (20; 40) und einen abnehmbaren Deckel (21; 41), der mit dem Unterteil (20; 40) ein Innengehäuse begrenzt;
• mindestens eine Leiterplatte (22; 42), die sich in dem Innengehäuse parallel zu dem Unterteil (20; 40) erstreckt;
• mindestens ein erstes Hauptpaar (23₁; 43₁) von elektrischen Kontakten und ein erstes sekundäres Paar (23₂; 43₂) von elektrischen Kontakten, die von der mindestens einen Leiterplatte (22; 42) getragen werden, wobei jedes Paar von elektrischen Kontakten einen ersten elektrischen Kontakt (24₁, 24₂; 44₁, 44₂) und einen zweiten elektrischen Kontakt (25₁, 25₂; 45₁, 45₂) aufweist;
• einen ersten Satz (26₁; 46₁) von Leiterbahnen, der von der mindestens einen Leiterplatte (22); 42) getragen wird und die ersten elektrischen Kontakte (24₁, 24₂; 44₁, 44₂) des ersten Hauptpaars (23₁; 43₁) und des ersten sekundären Paars (23₂; 43₂) elektrisch koppelt, und einen zweiten Satz (26₂; 46₂) von Leiterbahnen, der von der mindestens einen Leiterplatte (22; 42) getragen wird und die zweiten elektrischen Kontakte (25₁, 25₂; 45₁, 45₂) des ersten Hauptpaars (23₁; 43₁) und des ersten sekundären Paars (23₂; 43₂) elektrisch koppelt; und
• einen ersten (27₁; 47₁) und einen zweiten (27₂; 47₂) Hauptzugangsweg zu der Dose und einen ersten sekundären Zugangsweg (27₃; 47₃) zu der Dose,
wobei der erste und der zweite elektrische Kontakt (24₁, 25₁; 44₁, 45₁) des ersten Hauptpaars (23₁; 43₁) zwei Piercing- oder Schneid-Klemm-Kontakte sind, die sich senkrecht über der mindestens einen Leiterplatte (22; 42) erstrecken und dazu ausgelegt sind, zwei isolierte Leiter eines selben einpaarigen Ethernet-Hauptkabels (1a), die durch die beiden Hauptzugangswege (27₁, 27₂; 47₁, 47₂) zu der Dose in die Dose (2; 4) eintreten und daraus austreten, quer aufnehmen und direkt elektrisch zu verbinden,
wobei die Anschlussdose (2; 4) ferner ein erstes (28₁; 48₁) und ein zweites (28_{2;} 48₂) metallisches Verbindungselement umfasst, die von der mindestens einen Leiterplatte (22; 42) getragen werden und sich senkrecht über ihr erstrecken, wobei jedes erste und zweite metallische Verbindungselement (28₁, 28₂; 48₁, 48₂) zwischen einem Hauptzugangsweg und dem ersten Hauptpaar (23₁; 43₁) von Piercing- oder Schneid-Klemm-Kontakten positioniert ist,
**dadurch gekennzeichnet, dass** jedes erste und zweite metallische Verbindungselement (28₁, 28₂; 48₁, 48₂) einen Halter bildet, um das einpaarige Ethernet-Hauptkabel (1a) quer aufzunehmen, dass die Anschlussdose ferner einen zusätzlichen Satz (26₃; 46₅) von Leiterbahnen umfasst, der von der mindestens einen Leiterplatte (22; 42) getragen wird und die metallischen Verbindungselemente (28₁, 28₂; 48₁, 48₂) untereinander elektrisch koppelt, und dass die mindestens eine Leiterplatte (22; 42) ferner eine Impedanzanpassungsschaltung (29₁, 29₂; 29₁-29₃, 29; 49₁) mit passiven Elementen trägt, die zwischen dem ersten Satz (26₁; 49₁) und dem zweiten Satz (26₂; 49₂) von Leiterbahnen angeschlossen ist.

2. Anschlussdose (2; 4) nach Anspruch 1, wobei der erste und der zweite elektrische Kontakt (24₂, 25₂; 44₂, 45₂) des ersten sekundären Paars (23₂; 43₂) in Form eines Steckverbinders vorliegen, der geeignet ist, mit einem an einem Ende des sekundären Ethernet-Kabels (1b; 1c) vorgesehenen Steckverbinder zusammenzuwirken.

3. Anschlussdose (2; 4) nach Anspruch 1, wobei der erste und der zweite elektrische Kontakt (24₂, 25₂; 44₂, 45₂) des ersten sekundären Paars (23₂; 43₂) zwei Piercing- oder Schneid-Klemm-Kontakte sind, die sich senkrecht über der mindestens einen Leiterplatte (22; 42) erstrecken, so dass sie die beiden isolierten Leiter des sekundären Ethernet-Kabels (1b; 1c) quer aufnehmen und direkt elektrisch verbinden, wobei die Anschlussdose (2; 4) ein drittes metallisches Verbindungselement (28₃; 48₃) umfasst, das von der mindestens einen Leiterplatte (22; 42) getragen wird und sich senkrecht darüber erstreckt und mit dem zusätzlichen Satz (26₃; 46₅) von Leiterbahnen elektrisch gekoppelt ist, wobei das dritte metallische Verbindungselement (28₃; 48₃) zwischen dem ersten sekundären Zugangsweg (27₃; 47₃) und dem ersten sekundären Paar (23₂; 43₂) von Piercing- oder Schneid-Klemm-Kontakten positioniert ist und einen Halter bildet, um das sekundäre Ethernet-Kabel (1b; 1c) quer aufzunehmen.

4. Anschlussdose (2; 4) nach einem der vorhergehenden Ansprüche, umfassend ein zweites Hauptpaar (23₃; 43₃) von elektrischen Kontakten zwischen dem ersten Hauptpaar (23₁; 43₁) von elektrischen Kontakten und dem zweiten metallischen Verbindungselement (28₂; 48₂), wobei der erste und der zweite elektrische Kontakt (24₃, 25₃; 44₃, 45₃) des zweiten Hauptpaars (23₃; 43₃) zwei Piercing- oder Schneid-Klemm-Kontakte sind, die sich senkrecht über der mindestens einen Leiterplatte (22; 42) erstrecken, wobei die Kontakte der beiden Hauptpaare (23₁, 23₃; 43₁, 43₃) dazu ausgelegt sind, zwei isolierte Leiter von zwei diskontinuierlichen Segmenten desselben einpaarigen Ethernet-Hauptkabels (1a), die durch den ersten Hauptweg (27₁; 47₁) bzw. den zweiten Hauptweg (27₂; 47₂) eintreten und austreten, quer aufzunehmen und direkt elektrisch zu verbinden.

5. Anschlussdose (2) nach Anspruch 4, wobei die Sätze (26₁, 26₂; 26₁-26₃) von Leiterbahnen von einer Seite der mindestens einen Leiterplatte (22) getragen werden, die entgegengesetzt zu derjenigen ist, die die Piercing- oder Schneid-Klemm-Kontakte trägt.

6. Anschlussdose (2) nach einem der Ansprüche 4 oder 5, wobei der erste elektrische Kontakt (24₃) des zweiten Hauptpaars (23₃) mit dem ersten Satz (26₁) von Leiterbahnen elektrisch gekoppelt ist und der zweite elektrische Kontakt (25₃) des zweiten Hauptpaars (23₃) mit dem zweiten Satz (26₂) von Leiterbahnen elektrisch gekoppelt ist.

7. Anschlussdose (2) nach Anspruch 6, wobei die Impedanzanpassungsschaltung (29₁, 29₂; 29₁-29₃, 29) mit passiven Elementen jedem Paar von Piercing- oder Schneid-Klemm-Kontakten zugeordnet ist.

8. Anschlussdose (2) nach einem der Ansprüche 6 oder 7, **dadurch gekennzeichnet, dass** die mindestens eine Leiterplatte (22) ferner eine eine Busabschlusslast bildende Schaltung (29₄) trägt, die in Reihe mit dem ersten Satz (26₁) und dem zweiten Satz (26₂) von Leiterbahnen angeschlossen ist, dass die Anschlussdose (2) ein metallisches Teil (28'₂) umfasst, das mit dem zweiten metallischen Verbindungselement (28₂) mechanisch fest verbunden ist, wobei das metallische Teil (28'₂) dazu ausgelegt ist, die eine Abschlusslast bildende Schaltung (29₄) zu deaktivieren bzw. zu aktivieren, je nachdem, ob in dem Halter, der durch das zweite metallische Verbindungselement (28₂) gebildet wird, ein Kabel vorhanden bzw. nicht vorhanden ist.

9. Anschlussdose (4) nach Anspruch 4, umfassend ein zweites sekundäres Paar (43₄) von elektrischen Kontakten, das von der mindestens einen Leiterplatte (42) getragen wird und einen ersten elektrischen Kontakt (44₄) und einen zweiten elektrischen Kontakt (45₄) aufweist, einen dritten Satz (46₃) von Leiterbahnen, der von der mindestens einen Leiterplatte (42) getragen wird und die ersten elektrischen Kontakte (44₃, 44₄) des zweiten Hauptpaars (43₃) und des zweiten sekundären Paars (43₄) elektrisch koppelt, und einen vierten Satz (46₄) von Leiterbahnen, der von der mindestens einen Leiterplatte (42) getragen wird und die zweiten elektrischen Kontakte (45₃, 45₄) des zweiten Hauptpaars (43₃) und des zweiten sekundären Paars (43₄) elektrisch koppelt.

10. Anschlussdose (4) nach Anspruch 9, wobei die mindestens eine Leiterplatte (42) ferner eine zweite Impedanzanpassungsschaltung (49₁) mit passiven Elementen trägt, die zwischen dem dritten Satz (46₃) und dem vierten Satz (46₄) von Leiterbahnen angeschlossen ist.

11. Anschlussdose (4) nach Anspruch 10, wobei die Sätze (46₁-46₄; 46₁-46₅) von Leiterbahnen von einer Seite der mindestens einen Leiterplatte (42) getragen werden, die entgegengesetzt zu derjenigen ist, die die Piercing- oder Schneid-Klemm-Kontakte trägt.

12. Anschlussdose (4) nach einem der Ansprüche 9 bis 11, die einen zweiten sekundären Zugangsweg (47₄) zu der Dose umfasst und bei welcher der erste und der zweite elektrische Kontakt des ersten sekundären Paars (43₂) und des zweiten sekundären Paars (43₄) dazu ausgelegt sind, zwei isolierte Leiter an den jeweiligen Enden eines selben einpaarigen sekundären Ethernet-Kabels (1c) elektrisch zu verbinden, das über den ersten und den zweiten sekundären Weg (47₃, 47₄) angeschlossen ist, um eine Bypass-Schleife (16) zu bilden.

13. Drahtgebundenes Ethernet-Netzwerk, umfassend:
• ein einpaariges Ethernet-Hauptkabel (1a), das im Inneren eines isolierenden Außenmantels (14) ein Paar isolierte Leiter (10) aufweist, das geeignet ist, Daten und Leistung zu übertragen, wobei die beiden Enden des Hauptkabels (1a) zwischen einer Daten- und Leistungsquelle (5) beziehungsweise einem Abschluss (6) angeschlossen sind;
• mindestens eine Einrichtung (3), die geeignet ist, Daten und Leistung von dem einpaarigen Ethernet-Hauptkabel (1a) aufzunehmen; und
• ein einpaariges sekundäres Ethernet-Kabel (1b), das im Inneren eines isolierenden Außenmantels (14) ein Paar isolierte Leiter (10) aufweist, das geeignet ist, Daten und Leistung zu übertragen, wobei ein erstes Ende des sekundären Kabels (1b) mit der Einrichtung (3) elektrisch verbunden ist;
**dadurch gekennzeichnet, dass** es eine erste Anschlussdose (2) nach einem der Ansprüche 1 bis 8 umfasst, die in dem Netzwerk so angeschlossen ist, dass das einpaarige Ethernet-Hauptkabel (1a) durch den ersten (27₁) bzw. den zweiten (27₂) Hauptzugangsweg zu der ersten Dose (2) in die erste Anschlussdose (2) eintritt und daraus austritt, wobei es von dem Halter des ersten (29₁) und des zweiten (29₂) metallischen Verbindungselements quer aufgenommen wird, wobei die beiden isolierten Leiter des einpaarigen Ethernet-Hauptkabels (1a) in elektrischer Verbindung mit dem ersten und dem zweiten elektrischen Kontakt (24₁, 25₁) des ersten Hauptpaars (23₁) sind, und dass die beiden isolierten Leiter des zweiten Endes des einpaarigen sekundären Ethernet-Kabels (1b) durch den ersten sekundären Zugangsweg (27₃) zu der ersten Dose (2) mit dem ersten und dem zweiten elektrischen Kontakt (24₂, 25₂) des ersten sekundären Paars (23₂) elektrisch verbunden sind.

14. Drahtgebundenes Ethernet-Netzwerk nach Anspruch 13, **dadurch gekennzeichnet, dass** das einpaarige Ethernet-Hauptkabel (1a) im Inneren des isolierenden Außenmantels (14) eine Abschirmungslage (13) aufweist, die die beiden isolierten Leiter (10) umgibt, und dass das einpaarige Ethernet-Hauptkabel (1a) von seinem isolierenden Außenmantel abgemantelt ist, damit die Abschirmungslage in Kontakt mit den Haltern des ersten (29₁) und des zweiten (29₂) metallischen Verbindungselements der ersten Anschlussdose (2) ist.

15. Drahtgebundenes Ethernet-Netzwerk nach einem der Ansprüche 13 oder 14, **dadurch gekennzeichnet, dass** die erste Anschlussdose (2) eine Anschlussdose nach Anspruch 4 ist und dass das einpaarige Ethernet-Hauptkabel (1a) in zwei diskontinuierliche Segmente getrennt ist, wobei die Kontakte des ersten Hauptpaars (23₁) die beiden isolierten Leiter des diskontinuierlichen Segments, die durch den ersten Hauptweg (27₁) eintreten, quer aufnehmen und direkt elektrisch verbinden, und wobei die Kontakte des zweiten Hauptpaars (23₃) die beiden isolierten Leiter des diskontinuierlichen Segments, die durch den zweiten Hauptweg (27₂) austreten, quer aufnehmen und direkt elektrisch verbinden.

16. Verdrahtetes Ethernet-Netzwerk nach Anspruch 15, **dadurch gekennzeichnet, dass** der Abschluss durch eine zweite Anschlussdose (2) nach Anspruch 8 ausgeführt ist, deren eine Abschlusslast bildende Schaltung (29₄) aktiviert ist.

17. Drahtgebundenes Ethernet-Netzwerk, umfassend:
• ein einpaariges Ethernet-Hauptkabel (1a), das im Inneren eines isolierenden Außenmantels (14) ein Paar isolierte Leiter (10) aufweist, das geeignet ist, Daten und Leistung zu übertragen, wobei die beiden Enden des Hauptkabels (1a) zwischen einer Daten- und Leistungsquelle (5) beziehungsweise einem Abschluss (6) angeschlossen sind;
• mindestens eine Einrichtung (3), die geeignet ist, Daten und Leistung von dem einpaarigen Ethernet-Hauptkabel (1a) aufzunehmen; und
• ein einpaariges sekundäres Ethernet-Kabel (1b), das im Inneren eines isolierenden Außenmantels (14) ein Paar isolierte Leiter (10) aufweist, das geeignet ist, Daten und Leistung zu übertragen, wobei ein erstes Ende des sekundären Kabels (1b) mit der Einrichtung (3) elektrisch verbunden ist;
**dadurch gekennzeichnet, dass** es eine erste Anschlussdose (2) nach einem der Ansprüche 1 bis 8, ein zweites einpaariges sekundäres Ethernet-Kabel (1c), das im Inneren eines isolierenden Außenmantels ein Paar isolierte Leiter aufweist, das geeignet ist, Daten und Leistung zu übertragen, und eine zweite Anschlussdose (4) nach Anspruch 12 aufweist, die in dem Netzwerk so verbunden sind, dass:
• der erste und der zweite elektrische Kontakt des ersten Hauptpaars (43₁) und des zweiten Hauptpaars (43₃) der zweiten Anschlussdose (4) elektrisch direkt mit den beiden isolierten Leitern von zwei diskontinuierlichen Segmenten des einpaarigen Ethernet-Hauptkabels (1a) verbunden sind, die durch den ersten Hauptweg (47₁) bzw. den zweiten Hauptweg (47₃) der zweiten Dose (4) eintreten und austreten;
• der erste und der zweite elektrische Kontakt des ersten sekundären Paars (43₂) und des zweiten sekundären Paars (43₄) der zweiten Anschlussdose (4) elektrisch direkt mit den beiden isolierten Leitern an den jeweiligen Enden des zweiten einpaarigen sekundären Ethernet-Kabels (1c) durch den ersten und zweiten sekundären Weg (47₃, 47₄) verbunden sind, so dass eine Bypass-Schleife (16) gebildet wird;
• die Bypass-Schleife (16) durch den ersten (27₁) bzw. zweiten (27₂) Hauptzugangsweg zu der ersten Dose (2) in die erste Anschlussdose (2) eintritt und daraus austritt, wobei sie von dem Halter des ersten (29₁) und des zweiten (29₂) metallischen Verbindungselements quer aufgenommen wird, wobei die beiden isolierten Leiter der Bypass-Schleife (16) in elektrischer Verbindung mit dem ersten und dem zweiten elektrischen Kontakt (24₁, 25₁) des ersten Hauptpaars (23₁) sind, und
• die beiden isolierten Leiter des zweiten Endes des einpaarigen sekundären Ethernet-Kabels (1b) durch den ersten sekundären Zugangsweg (27₃) zu der ersten Dose (2) mit dem ersten und dem zweiten elektrischen Kontakt (24₂, 25₂) des ersten sekundären Paars (23₂) der ersten Dose (2) elektrisch verbunden sind.

18. Drahtgebundenes Ethernet-Netzwerk nach Anspruch 17, **dadurch gekennzeichnet, dass** das einpaarige Ethernet-Hauptkabel (1a) im Inneren des isolierenden Außenmantels eine Abschirmungslage aufweist, die die beiden isolierten Leiter umgibt, und dass jedes diskontinuierliche Segment des einpaarigen Ethernet-Hauptkabels (1a) von seinem Mantel abgemantelt ist, damit die Abschirmungslage in Kontakt mit dem Halter des ersten (48₁) oder des zweiten (48₃) metallischen Verbindungselements der zweiten Anschlussdose (4) ist.

## Claims

1. Connection housing (2; 4) for single-pair Ethernet cables (1; 1a, 1b, 1c), said connection housing (2; 4) comprising:
• a base (20; 40) and a removable cover (21; 41) delimiting with the base (20; 40) an internal housing;
• at least one printed circuit board (22; 42) extending in the internal housing parallel to the base (20; 40);
• at least one first main pair (23₁; 43₁) of electrical contacts and a first secondary pair (23₂; 43₂) of electrical contacts borne by said at least one printed circuit board (22; 42), each pair of electrical contacts comprising a first electrical contact (24₁, 24₂; 44₁, 44₂) and a second electrical contact (25₁, 25₂; 45₁, 45₂);
• a first set (26₁; 46₁) of conductive tracks borne by said at least one printed circuit board (22; 42) and electrically coupling the first electrical contacts (24₁, 24₂; 44₁, 44₂) of the first main pair (23₁; 43₁) and of the first secondary pair (23₂; 43₂), and a second set (26₂; 46₂) of conductive tracks borne by said at least one printed circuit board (22; 42) and electrically coupling the second electrical contacts (25₁, 25₂; 45₁, 45₂) of the first main pair (23₁; 43₁) and of the first secondary pair (23₂; 43₂); and
• a first (27₁; 47₁) and a second (27₂; 47₂) main way for access to the housing, and a first secondary way (27₃; 47₃) for access to the housing,
wherein the first and the second electrical contacts (24₁, 25₁; 44₁, 45₁) of the first main pair (23₁; 43₁) are two perforation or insulation displacement contacts extending at right angles above said at least one printed circuit board (22; 42) and configured to transversely receive and directly electrically connect two insulated conductors of a same main single-pair Ethernet cable (1a) entering and exiting from the housing (2; 4) by the two main ways (27₁, 27₂); 47₁, 47₂) for access to the housing, said connection housing (2; 4) further comprising a first (28₁; 48₁) and a second (28₂; 48₂) metal connection element borne by and extending at right angles above said at least one printed circuit board (22; 42), each first and second metal connection element (28₁, 28₂; 48₁, 48₂) being positioned between a main access way and said first main pair (23₁; 43₁) of perforation or insulation displacement contacts,
**characterized in that** each first and second metal connection element (28₁, 28₂; 48₁, 48₂) forms a cradle to transversely receive said main single-pair Ethernet cable (1a), and **in that** the connection housing further comprises an additional set (26₃; 46₅) of conductive tracks borne by said at least one printed circuit board (22; 42) and electrically coupling together the metal connection elements (28₁, 28₂; 48₁, 48₂), and **in that** said at least one printed circuit board (22; 42) further bears an impedance matching circuit (29₁, 29₂; 29₁-29₃, 29; 49₁) with passive elements linked between the first set (26₁; 49₁) and the second set (26₂; 49₂) of conductive tracks.

2. Connection housing (2; 4) according to Claim 1, wherein the first and the second electrical contacts (24₂, 25₂; 44₂, 45₂) of the first secondary pair (23₂; 43₂) are in the form of a connector capable of cooperating with a connector provided at an end of said secondary Ethernet cable (1b; 1c).

3. Connection housing (2; 4) according to Claim 1, wherein the first and the second electrical contacts (24₂, 25₂; 44₂, 45₂) of the first secondary pair (23₂; 43₂) are two perforation or insulation displacement contacts extending at right angles above said at least one printed circuit board (22; 42), so as to transversely receive and directly electrically connect the two insulated conductors of said secondary Ethernet cable (1b; 1c), said connection housing (2; 4) comprising a third metal connection element (28₃; 48₃) borne by and extending at right angles above said at least one printed circuit board (22; 42), and electrically coupled to the additional set (26₃; 46₅) of conductive tracks, said third metal connection element (28₃; 48₃) being positioned between the first secondary access way (27₃; 47₃) and the first secondary pair (23₂; 43₂) of perforation or insulation displacement contacts and forming a cradle to transversely receive said secondary Ethernet cable (1b; 1c).

4. Connection housing (2; 4) according to any one of the preceding claims, comprising a second main pair (23₃; 43₃) of electrical contacts between the first main pair (23₁; 43₁) of electrical contacts and the second metal connection element (28₂; 48₂), the first and the second electrical contacts (24₃, 25₃; 44₃, 45₃) of the second main pair (23₃; 43₃) being two perforation or insulation displacement contacts extending at right angles above said at least one printed circuit board (22; 42), the contacts of the two main pairs (23₁, 23₃; 43₁, 43₃) being configured to transversely receive and directly electrically connect two insulated conductors of two discontinuous segments of said same main single-pair Ethernet cable (1a) entering and exiting respectively through the first main way (27₁; 47₁) and the second main way (27₂; 47₂).

5. Connection housing (2) according to Claim 4, wherein the sets (26₁, 26₂; 26₁ - 26₃) of conductive tracks are borne by a face of said at least one printed circuit board (22) opposite that bearing the perforation or insulation displacement contacts.

6. Connection housing (2) according to either one of Claims 4 and 5, wherein the first electrical contact (24₃) of the second main pair (23₃) is coupled electrically to the first set (26₁) of conductive tracks, and the second electrical contact (25₃) of the second main pair (23₃) is coupled electrically to the second set (26₂) of conductive tracks.

7. Connection housing (2) according to Claim 6, wherein said impedance matching circuit (29₁, 29₂; 29₁-29₃, 29) with passive elements is associated with each pair of perforation or insulation displacement contacts.

8. Connection housing (2) according to either one of Claims 6 and 7, **characterized in that** said at least one printed circuit board (22) further bears a circuit (29₄) forming a bus termination load, connected in series with the first set (26₁) and the second set (26₂) of conductive tracks, and **in that** the connection housing (2) comprises a metal part (28'₂) secured mechanically to the second metal connection element (28₂), said metal part (28'₂) being configured to deactivate, respectively activate, the circuit (29₄) forming the termination load according to whether a cable is present, respectively not present, in the cradle formed by the second metal connection element (28₂).

9. Connection housing (4) according to Claim 4, comprising a second secondary pair (43₄) of electrical contacts borne by said at least one printed circuit board (42) and comprising a first electrical contact (44₄) and a second electrical contact (45₄), a third set (46₃) of conductive tracks borne by said at least one printed circuit board (42) and electrically coupling the first electrical contacts (44₃, 44₄) of the second main pair (43₃) and of the second secondary pair (43₄), and a fourth set (46₄) of conductive tracks borne by said at least one printed circuit board (42) and electrically coupling the second electrical contacts (45₃, 45₄) of the second main pair (43₃) and of the second secondary pair (43₄) .

10. Connection housing (4) according to Claim 9, wherein said at least one printed circuit board (42) further bears a second impedance matching circuit (49₁) with passive elements linked between the third set (46₃) and the fourth set (46₄) of conductive tracks.

11. Connection housing (4) according to Claim 10, wherein the sets (46₁ - 46₄; 46₁ - 46₅) of conductive tracks are borne by a face of said at least one printed circuit board (42) opposite that bearing the perforation or insulation displacement contacts.

12. Connection housing (4) according to any one of Claims 9 to 11, comprising a second secondary way (47₄) for access to the housing, and wherein the first and the second electrical contacts of the first secondary pair (43₂) and of the second secondary pair (43₄) are configured to electrically connect two insulated conductors to the respective ends of a same secondary single-pair Ethernet cable (1c) linked through the first and the second secondary ways (47₃, 47₄) to form a bypass loop (16).

13. Wired Ethernet network comprising:
• a main single-pair Ethernet cable (1a) comprising, inside an outer insulating sheath (14), a pair of insulated conductors (10) capable of transmitting data and power, said main cable (1a) having its two ends linked respectively between a source (5) of data and of power and a termination (6);
• at least one device (3) capable of receiving the data and the power from the main single-pair Ethernet cable (1a); and
• a secondary single-pair Ethernet cable (1b) comprising, inside an outer insulating sheath (14), a pair of insulated conductors (10) capable of transmitting data and power, a first end of the secondary cable (1b) being connected electrically to said device (3);
**characterized in that** it comprises a first connection housing (2) according to any one of Claims 1 to 8, connected in the network such that said main single-pair Ethernet cable (1a) enters and exits from the first connection housing (2) respectively through the first (27₁) and the second (27₂) main ways for access to the first housing (2), by being received transversely by the cradle of the first (29₁) and of the second (29₂) metal connection elements, the two insulated conductors of the main single-pair Ethernet cable (1a) being electrically connected with the first and the second electrical contacts (24₁, 25₁) of the first main pair (23₁), and **in that** the two insulated conductors of the second end of said secondary single-pair Ethernet cable (1b) are linked electrically, through the first secondary way (27₃) for access to the first housing (2), to the first and the second electrical contacts (24₂, 25₂) of the first secondary pair (23₂).

14. Wired Ethernet network according to Claim 13, **characterized in that** the main single-pair Ethernet cable (1a) comprises, inside the insulating outer sheath (14), a shielding layer (13) surrounding the two insulated conductors (10), and **in that** the main single-pair Ethernet cable (1a) is stripped of its insulating outer sheath in order for the shielding layer to be in contact with the cradles of the first (29₁) and second (29₂) metal connection elements of the first connection housing (2).

15. Wired Ethernet network according to either one of Claims 13 and 14, **characterized in that** the first connection housing (2) is according to Claim 4, and **in that** the main single-pair Ethernet cable (1a) is cut into two discontinuous segments, the contacts of the first main pair (23₁) receiving transversely and directly electrically connecting the two insulated conductors of the discontinuous segment entering through the first main way (27₁) and the contacts of the second main pair (23₃) receiving transversely and directly electrically connecting the two insulated conductors of the discontinuous segment exiting through the second main way (27₂).

16. Wired Ethernet network according to Claim 15, **characterized in that** said termination is produced by a second connection housing (2) according to Claim 8, of which the circuit (29₄) forming the termination load is activated.

17. Wired Ethernet network comprising:
• a main single-pair Ethernet cable (1a) comprising, inside an outer insulating sheath (14), a pair of insulated conductors (10) capable of transmitting data and power, said main cable (1a) having its two ends linked respectively between a source (5) of data and of power and a termination (6);
• at least one device (3) capable of receiving the data and the power from the main single-pair Ethernet cable (1a); and
• a secondary single-pair Ethernet cable (1b) comprising, inside an outer insulating sheath (14), a pair of insulated conductors (10) capable of transmitting data and power, a first end of the secondary cable (1b) being connected electrically to said device (3);
**characterized in that** it comprises a first connection housing (2) according to any one of Claims 1 to 8, a second secondary single-pair Ethernet cable (1c) comprising, inside an outer insulating sheath, a pair of insulated conductors capable of transmitting data and power, and a second connection housing (4) according to Claim 12, connected in the network such that:
• the first and the second electrical contacts of the first main pair (43₁) and of the second main pair (43₃) of the second connection housing (4) are directly electrically connected to the two insulated conductors of two discontinuous segments of said main single-pair Ethernet cable (1a) entering and exiting respectively through the first main way (47₁) and the second main way (47₃) of said second housing (4);
• the first and the second electrical contacts of the first secondary pair (43₂) and of the second secondary pair (43₄) of the second connection housing (4) are directly electrically connected to the two insulated conductors at the respective ends of said second secondary single-pair Ethernet cable (1c) through the first and the second secondary ways (47₃, 47₄) so as to form a bypass loop (16);
• said bypass loop (16) enters and exits from the first connection housing (2) respectively through the first (27₁) and the second (27₂) main ways for access to the first housing (2), by being received transversely by the cradle of the first (29₁) and of the second (29₂) metal connection elements, the two insulated conductors of the bypass loop (16) being electrically connected with the first and the second electrical contacts (24₁, 25₁) of the first main pair (23₁), and
• the two insulated conductors of the second end of said secondary single-pair Ethernet cable (1b) are linked electrically, through the first secondary way (27₃) for access to the first housing (2), to the first and the second electrical contacts (24₂, 25₂) of the first secondary pair (23₂) of the first housing (2).

18. Wired Ethernet network according to Claim 17, **characterized in that** the main single-pair Ethernet cable (1a) comprises, inside the outer insulating sheath, a shielding layer surrounding the two insulated conductors, and **in that** each discontinuous segment of the main single-pair Ethernet cable (1a) is stripped of its sheath in order for the shielding layer to be in contact with the cradle of the first (48₁) or of the second (48₃) metal connection elements of the second connection housing (4).
